# EUROPEAN PATENT SPECIFICATION

(11) **EP 2 495 891 B1**
(45) Date of publication and mention of the grant of the patent: **28.02.2018**
(21) Application number: 11156315.1
(22) Date of filing: 28.02.2011
(51) Int. Cl.: H04B 10/114

(54) **Device to transmit data by displaying a coded image generated according to a selectable encoding scheme and associated methods**
Vorrichtung zum Senden von Daten durch Anzeige eines gemäß einem auswählbaren Codierungsschema erzeugten codierten Bildes sowie zugehörige Verfahren
Dispositif pour transmettre des données en affichant une image codée générée en fonction d'un schéma de codage sélectionnable et procédés correspondants

(43) Date of publication of application: 05.09.2012
(73) Proprietor: BlackBerry Limited, Waterloo, ON N2K 0A7 (CA)
(72) Inventor: Snow, Christopher Harris, Waterloo Ontario N2L 3W8 (CA); Oliver, Robert George, Owen Sound Ontario N4K 5A1 (CA); Oka, Anand Ravindra, Waterloo Ontario N2L 3W8 (CA); Almalki, Nazih, Waterloo Ontario N2L 3W8 (CA)
(74) Representative: Fennell, Gareth Charles

(56) References cited:
- WO-A1-2007/045937
- WO-A1-2009/032522
- US-B1- 7 224 370
- CLAYCOMB ET AL: "Using A Two Dimensional Colorized Barcode Solution for Authentication in Pervasive Computing", 2006 ACS/IEEE INTERNATIONAL CONFERENCE ON PERVASIVE SERVICES JUNE 26-29, 2006, PISCATAWAY, NJ, USA,IEEE, 1 January 2006 (2006-01-01), pages 173-180, XP031099919, DOI: DOI:10.1109/PERSER.2006.1652222 ISBN: 978-1-4244-0237-3
- NORIYASU YAMAMOTO ET AL: "A User Attestation System Using a Cellular Phone Equipped with Digital Camera", P2P, PARALLEL, GRID, CLOUD AND INTERNET COMPUTING (3PGCIC), 2010 INTERNATIONAL CONFERENCE ON, IEEE, PISCATAWAY, NJ, USA, 4 November 2010 (2010-11-04), pages 431-435, XP031831170, ISBN: 978-1-4244-8538-3
- MCCUNE J M ET AL: "Seeing-Is-Believing: Using Camera Phones for Human-Verifiable Authentication", SECURITY AND PRIVACY, 2005 IEEE SYMPOSIUM ON OAKLAND, CA, USA 08-11 MAY 2005, PISCATAWAY, NJ, USA,IEEE, 8 May 2005 (2005-05-08), pages 110-124, XP010798367, DOI: DOI:10.1109/SP.2005.19 ISBN: 978-0-7695-2339-2

## Description

### Technical Field

The present disclosure relates to the field of data transmission, and, more particularly, to data transmission via the display of a coded image.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices also allow users to send and receive electronic mail (email) messages wirelessly and access the Internet via a cellular network and/or a wireless local area network (WLAN), for example. In addition, these devices may allow users to send Short Messaging Service (SMS) messages, Personal Identification Number (PIN) messages, and instant messages. Furthermore, these devices may allow the storage of data of all types.

Given the amount of information now stored on a mobile device itself, and the prevalence of mobile devices, it may be desirable to wirelessly transfer an item of data from one mobile device to another mobile device. Such a transfer may be performed over a wide area network that both mobile devices are connected to, such as the Internet. This may lack a desired level of security, however. In addition, such a transfer may be performed over shorter range networks, such as WiFi and Bluetooth. Once again, however, this may lack a desired level of security, as these short range networks have sufficient range that a nearby infiltrator could intercept the transmission of data.

Consequently, the development of new secure methods of wirelessly transmitting data is desirable.

US 7,224,340 B1 describes a system for communication among embedded devices using visual images. WO 2009/032522 A1 describes a system and method for pre-configuring and authenticating data communication links.

### Brief Description of the Drawings

FIG. 1 is a schematic block diagram of an embodiment of a communications system in accordance with the present disclosure.
FIG. 2 is a schematic block diagram of an additional embodiment of a communications system in accordance with the present disclosure.
FIG. 3 is a schematic block diagram of a further embodiment of a communications system in accordance with the present disclosure.
FIG. 4 is a schematic block diagram of yet another embodiment of a communications system in accordance with the present disclosure.
FIG. 5 is a flowchart of a communications method in accordance with the present disclosure.
FIG. 6 is a schematic block diagram illustrating example components of a mobile wireless communications device that may be used with the communications systems of FIGS. 1, 2, 3, and 4.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime and multiple prime notation is used to indicate similar elements or steps in alternative embodiments.

Generally speaking, a communications system may include a first device having a first display and a first processor. The first processor may be configured to generate at least one coded image according to a selectable encoding scheme from among a plurality of different encoding schemes, and display the at least one coded image on the first display. A first communications device may be coupled to the first processor.

The communications system may also include a second device which may have a second camera configured to capture the at least one coded image on the first display, and a second communications device. A second processor may be coupled to the second camera and the second communications device and may be configured to send a status message, via the second and first communications devices to the first processor, related to whether the captured at least one coded image is decodable based upon a currently selected encoding scheme.

This communications system provides data transmission with security. Since the transmission of data is via a line of sight, a secure location in which to perform the transfer may be chosen, without worry that a nearby infiltrator could intercept the data.

The first processor may be configured to select a new encoding scheme based upon the status message. Therefore, in some cases, the first processor may be configured to select the new encoding scheme with a higher data density than the currently selected encoding scheme. In other cases, the first processor may be configured to select the new encoding scheme with a lower data density than the currently selected encoding scheme.

The status message may comprise a desired encoding scheme from among the plurality of different encoding schemes, and the first processor may be configured to select the desired encoding scheme based upon the status message. At least one of the plurality of different encoding schemes may comprise a repeating encoding scheme. Further, the at least one coded image may comprise a series of coded images.

In some applications, the first communications device and the second communications device may comprise first and second Bluetooth devices, respectively. In other applications, the second communications device may comprise a second display, and the second processor may be configured to display a status image representing the status message on the second display. In this case, the first communications device may comprise a first camera configured to capture the status image.

Alternatively, the second communications device may comprise an optical source, and the first communications device may comprise an optical detector. At least one of the first and second communications devices may comprise a mobile wireless communications device.

A method aspect may be directed to a communications method that may include generating at least one coded image according to a selectable encoding scheme from among a plurality of different encoding schemes, using a first processor of a first device, and displaying the at least one coded image on a first display of the first device. The communications method may also include capturing the at least one coded image on the first display, using a second camera of a second device. The communications method may further include sending a status message to the first processor, via a second communications device of the second device and a first communications device of the first device, related to whether the captured at least one coded image is decodable based upon a currently selected encoding scheme, using a second processor of the second device.

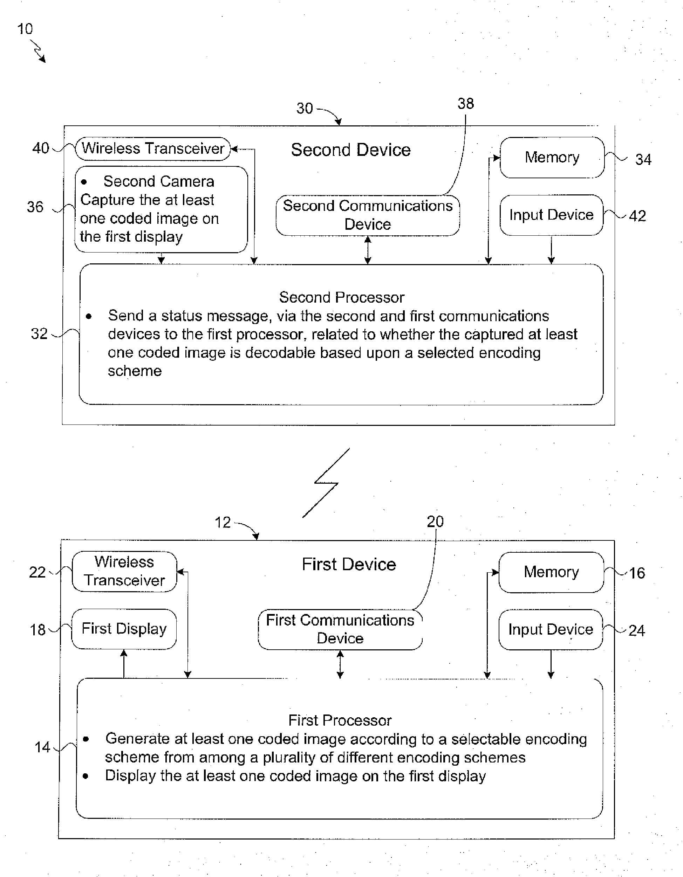

Referring initially to FIG. 1, a communications system **10** is now described. The communications system **10** includes a first device **12** and a second device **30.** The first device **12** includes a first processor **14** coupled to a memory **16,** a first display **18,** a first communications device **20,** a wireless transceiver **22,** and an input device **24.**

The input device **24** may be a keyboard, touch sensitive pad, trackball, thumbwheel, button, microphone, or other suitable device, for example. It should be appreciated that in some applications, the first display **18** may be a touch sensitive display, and may therefore serve as, or supplement, the input device **24.** In addition, the wireless transceiver **22** may be a cellular transceiver, and may be configured to perform both voice and data cellular communications.

The memory **16** may include volatile and non-volatile portions, and is configured to store data to be transferred to the second device **30.** The first processor **14** is configured to generate at least one coded image according to a selectable encoding scheme from among a plurality of different encoding schemes, and representing at least a portion of the data to be transferred to the second device **30.** The first processor **14** is also configured to display the at least one coded image on the first display **18.** The different encoding schemes may result in the coded image being a QR coded or barcode, although the coded image may also be another type of coded image, as will be appreciated by those of skill in the art.

The second device **30** includes a second processor **32** coupled to a memory **34,** a second camera **36,** a second communications device **38,** a wireless transceiver **40,** and an input device **42.** The input device **42** may be a keyboard, touch sensitive pad, trackball, thumbwheel, button, microphone, or other suitable device, for example. In addition, the wireless transceiver **40** may be a cellular transceiver, and may be configured to perform both voice and data cellular communications. The memory **34** may include volatile and non-volatile portions.

The second camera **36** is configured to capture the at least one coded image as the at least one coded image is displayed on the first display **18.** The second processor **32** is configured to generate a status message related to whether the captured coded image is decodable based upon a selected encoding scheme, and to send the stats message to the first device **12** via the second communications device **38** and the first communications device **20.**

The status message may contain a variety of information. For example, the status message may merely state whether the coded image was able to be decoded or not, or may state whether the second camera **36** was able to capture any image at all. The status message may even state that the coded image was unable to be decoded because the second camera **36** was only able to capture a portion thereof, or that the coded image was able to be decoded even though the second camera was only able to capture a portion thereof, as will be appreciated by the skilled artisan.

This status message provides the first device **12** with feedback as to whether the presented coded image was able to be decoded by the second processor **32.** An image may not be able to be decoded for a variety of reasons. For example, the second processor **32** may not be configured to decode that type of coded image, or the second camera **36** may not have been able to capture the coded image properly (e.g. because the first device **12** and second device **30** were not properly aligned, because of relative motion between the first and second devices, because there was an obstruction in the line of sight between the second camera **36** and the first display **18,** etc) .

By using this status message as feedback, the first processor **14** may then encode a next coded image according to a different encoding scheme, as will be explained in detail below, or may provide notice to a user that the transmission is not proceeding properly. For example, the second processor **32** may not be configured to decode images encoded with all of the different encoding schemes with which the first processor **14** is configured to encode images. Therefore, the first processor **14** may sequentially send coded images coded according to different encoding schemes until the second processor **32** is able to decode one of the coded images. Alternatively, the first processor **14** may send a new coded image encoded according to an encoding scheme selected via the input device **24.**

This communications system **10** provides increased security over other methods of data transmission because the transmission of data is along a line of sight path, and not via an interceptable radius of radio transmission, such as with cellular, Bluetooth, or WiFi communications. Users of the first device **12** and second device **30** can ensure that the transmission takes place in a secure setting, where the line of sight between the first and second devices is private, and not publicly viewable, further enhancing the security of data transmission using the communications system **10.**

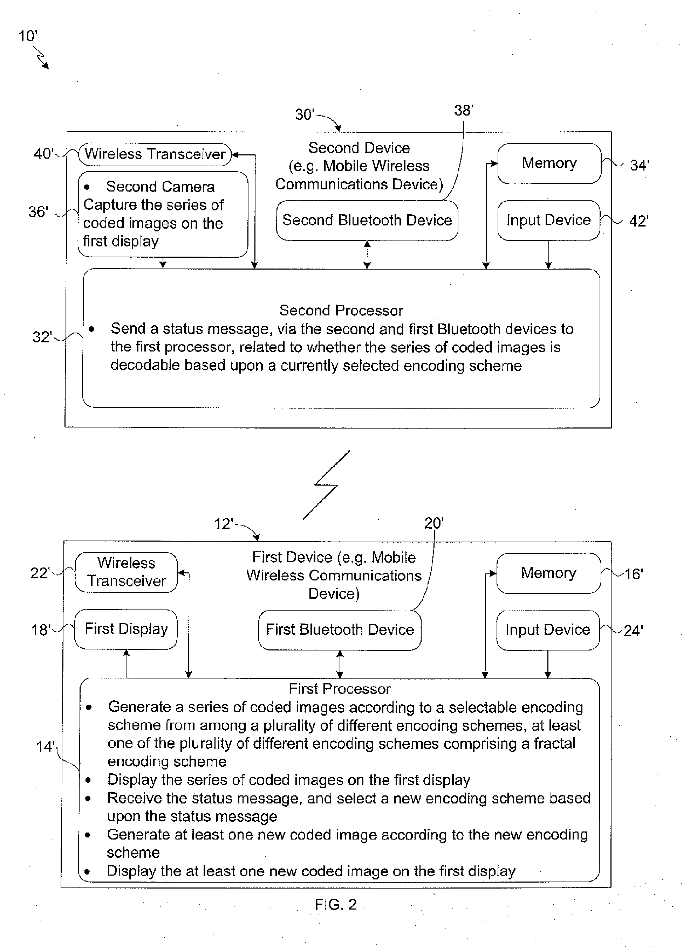

An additional embodiment of the communications system **10'** is now described with reference to FIG. 2. Portions of the communications system **10'** not specifically described are similar to those of the communications system **10** described above with reference to FIG. 1. In the embodiment shown in FIG. 2, the first device **12'** is a mobile wireless communications device as is the second device **30'.** It should, however, be appreciated that only one of the first and second devices **12', 30'** may be mobile wireless communications devices in some applications. Example mobile wireless communications devices **12', 30'** may include portable or personal media players (e.g., music or MP3 players, video players, etc.), remote controls (e.g., television or stereo remotes, etc.), portable gaming devices, portable or mobile telephones, smartphones, tablet computers, etc.

It should be appreciated that the first and second mobile wireless communications device **12', 30'** may each have different configurations, or may have similar configurations. For example, the first display **18'** may be on a face of the first mobile wireless communications device **12',** but the second camera **36'** may be on the back of the second mobile wireless communications device. Alternatively, the second camera **36'** may be on the front of the second mobile wireless communications device, above an optional second display.

In this embodiment, the first processor **14'** generates a series of coded images that encode a selected unit of data. That is, multiple coded images are generated and sequentially displayed, such that the entire selected unit of data is sent.

In addition, here, at least one of the plurality of different encoding schemes used by the first processor **14'** comprises a repeating encoding scheme. The use of a repeating encoding scheme for the coded image may be particularly useful in some applications where the second camera **36'** can view only a portion of the first display **18',** as different portions of the coded image may encode the same data. In such an application, merely capturing a portion of the coded image may be sufficient for decoding and thus recovery of the transmitted data.

Further, in this embodiment, the first communications device **20'** is a first Bluetooth device and the second communications device **38'** is a second Bluetooth device. After the second processor **14'** receives the status message, the second processor **14'** is configured to select a new encoding scheme based upon the status message. The second processor **14'** then generates at least one new coded image according to the new encoding scheme, and displays the at least one new coded image on the first display **18'.** It should be understood that the new coded image may include at least a portion of the data contained in the previous coded image, and may therefore be a re-sending of at least some of the same data encoded differently, should the status message indicate that the previous coded image was not able to be decoded. Conversely, the new coded image may include different data, and may therefore be at least part of a remaining portion of untransmitted data encoded differently, should the status message indicate that the previous coded image was indeed properly decoded. Also, the first processor **14'** may adjust a speed of the display of the series of coded images based upon the status message.

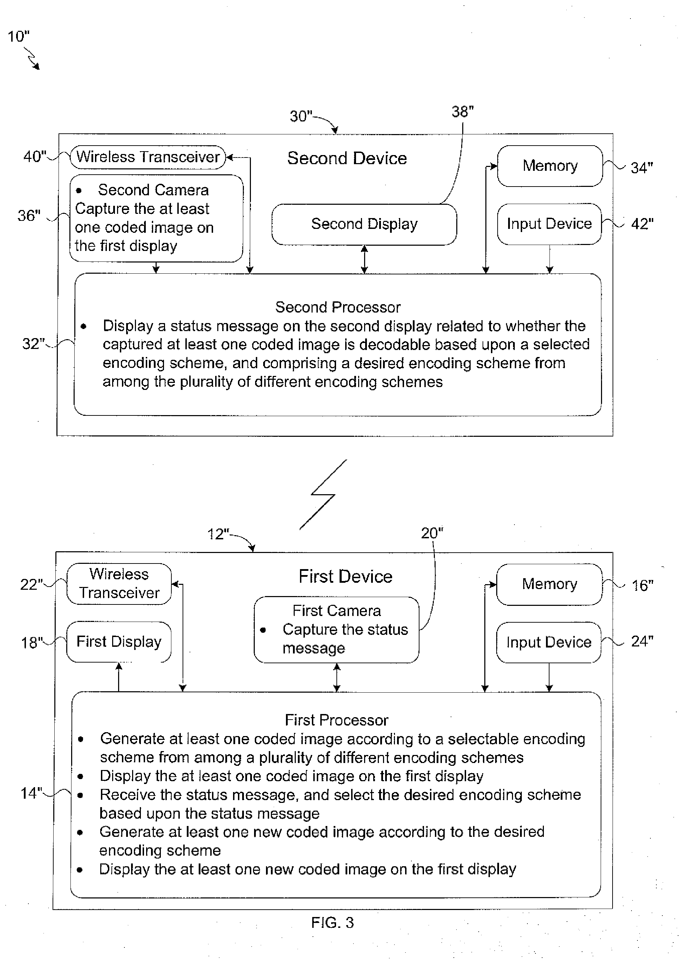

A further embodiment of the communications system **10"** is now described with reference to FIG. 3. Portions of the communications system **10"** not specifically described are similar to those of the communications system **10** described above with reference to FIG. 1.

In the embodiment shown in FIG. 3, the first communications device **20"** is a first camera and the second communications device **38"** is a second display. Therefore, the second processor **32"** generates the status message based upon whether the captured coded image is decodable, and displays the status message on the second display **38".** The first camera **20"** then captures the status message, which is in turn read by the first processor **14".** The status message may be a coded status message image in some applications. For example, if the captured coded image was decodable, the status message may be encoded as an image according to a same encoding scheme as the captured coded image. This embodiment may be considered to be particularly secure, as the only communications between the first device **12"** and second device **30"** are line of sight communications.

The status message in this embodiment may indicate a desired encoding scheme from among the plurality of different encoding schemes. For example, the second processor **32"** may have been unable to decode the captured coded image because the second processor **32"** was not configured to decode images coded according to the current encoding scheme, and may therefore request an encoding scheme in the status message that the second processor **32"** is configured to decode. Alternatively, the second processor camera **36"** may have been able to capture only a portion of the coded image, and the second processor **32"** may therefore request in the status message that the first processor **14"** use a repeating encoding scheme. The first processor **14"** then generated at least one new coded image according to the desired encoding scheme, and displays the at least new coded image on the first display **18".**

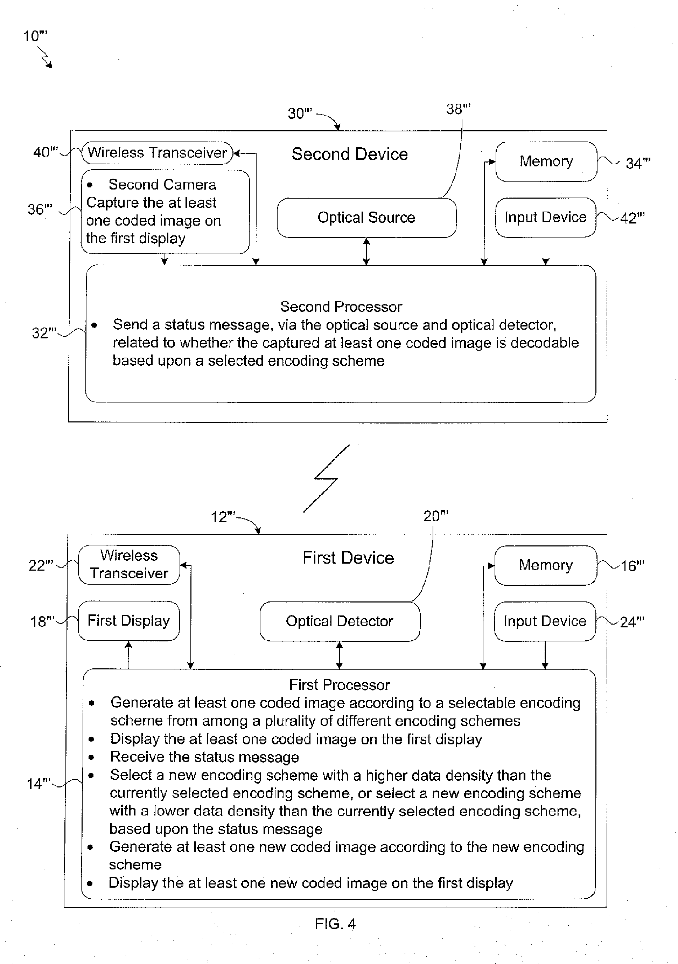

Yet another embodiment of a communications system **10"'** is now described with reference to FIG. 4. Portions of the communications system **10"'** not specifically described are similar to those of the communications system **10** described above with reference to FIG. 1.

Here, the first communications device **20"'** is an optical detector, and the second communications device **38"'** is an optical source. After receiving the status message, the first processor **14"'** may select a new encoding scheme with a higher data density than the currently selected encoding scheme (that is, the encoding scheme used to encode the coded image that the status message is related to), or may select a new encoding scheme with a lower data density than the currently selected encoding scheme. Those skilled in the art will understand that data density refers to the amount of data encoded into each coded image, and that different encoding schemes produce coded images that encode different amounts of data.

Therefore, if the status message indicates that the second processor **32"'** was able to decode the coded message, the first processor **14"'** may encode a new coded image according to a new encoding scheme that has a higher data density to thereby increase the speed of the data transfer. Similarly, if the status message indicates that the second processor **32"'** was unable to decode the coded image, the first processor **14"'** may encode a new coded image according to a new encoding scheme that has a lower data density thereby slow the speed of the data transfer, in the hope that the second processor **14"'** is able to decode the new coded image. The first processor **14"'** then generates at least one new coded image according to the new encoding scheme, and displays the at least one new coded image on the first display **18"'.** Since the encoding scheme may, in some instances, change between each coded image, the speed of the data transfer may be dynamically adjusted, so as to provide the quickest data transfer available under changing conditions.

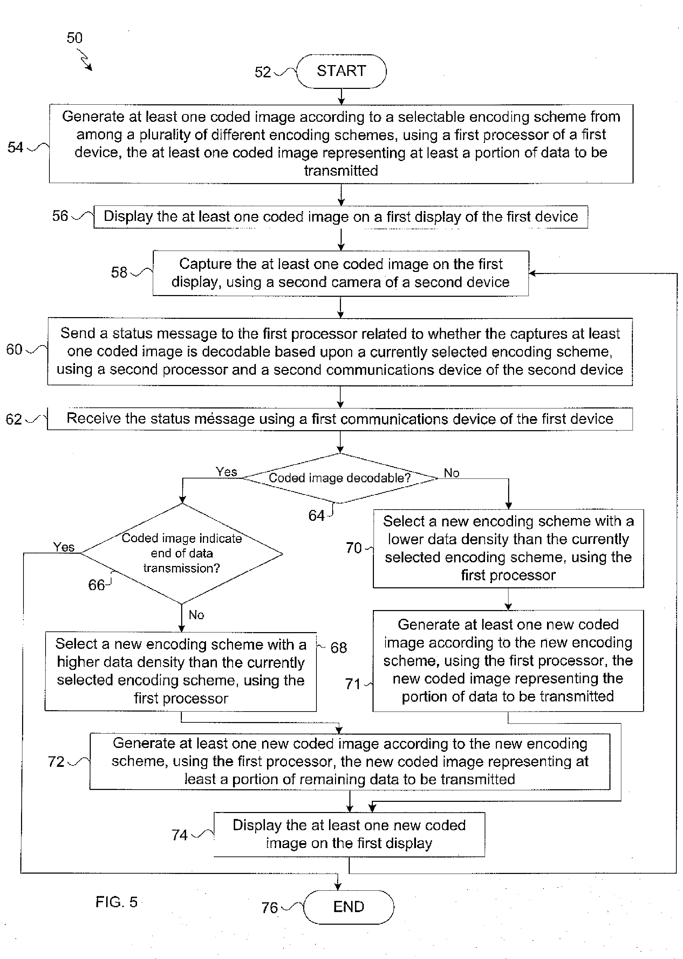

A method of operating a communications system is now described with reference to the flowchart **50** of FIG. 5. After the start (Block **52**), at least one coded image is generated according to a selectable encoding scheme from among a plurality of different encoding schemes, using a first processor of a first device, the at least one coded image representing at least a portion of data to be transmitted (Block **54**). The at least one coded image is then displayed on a first display of the first device (Block **56**).

The at least one coded image on the first display is captured, using a second camera of a second device (Block **58**). Next, a status message is sent to the first processor and is related to whether the captured at least one coded image is decodable based upon a currently selected encoding scheme, using a second processor and a second communications device of the second device (Block **60**).

The status message is received using a first communications device of the first device (Block **62**). At Block **64,** if the coded image is not decodable, the method progresses to Block **70,** where a new encoding scheme with a lower data density than the currently selected encoding scheme is selected, using the processor. Then, a new coded image is generated according to the new encoding scheme, using the first processor, the new coded image representing the initial portion of data to be transferred (Block **71**). The at least one new coded image is then displayed on the first display (Block **74**). The method then returns to Block **58,** and proceeds from there as described above.

If, at Block **64,** the coded image is decodable, and, at Block **66,** the coded image indicates an end of data transmission, the method ends at Block **76.** If the coded image is decodable, but the coded image does not indicate an end of data transmission, a new encoding scheme with a higher data density than the currently selected encoding scheme is selected, using the first processor, at Block **68.** Then, at least one new coded image is generated according to the new encoding scheme, using the first processor, the new coded image representing at least a portion of remaining data to be transmitted (Block **72**). The at least one new coded image is then displayed on the first display (Block **74**). The method then returns to Block **58,** and proceeds from there as described above.

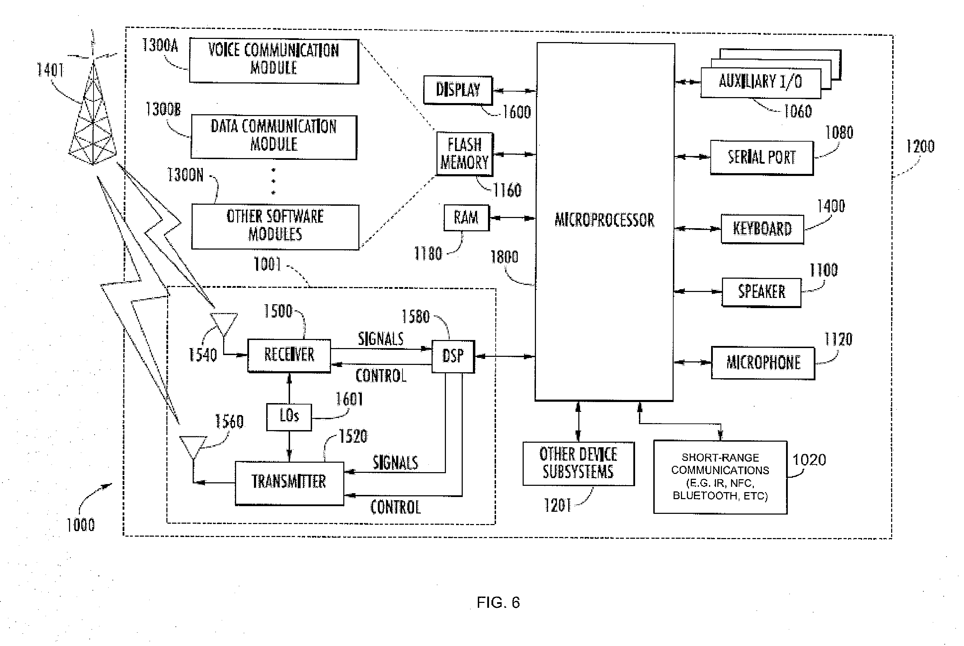

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to the processing device's **1800** operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A communications system **(10)** comprising:
a first device **(12)** comprising
a first display **(18),**
a first processor **(14)** configured to generate at least one coded image according to a selectable encoding scheme from among a plurality of different encoding schemes, and display the at least one coded image on said first display,
a first communications device **(20)** coupled to said first processor; and
a second device **(30)** comprising
a second camera **(36)** configured to capture the at least one coded image on said first display,
a second communications device **(38),**
a second processor **(32)** coupled to said second camera and said second communications device and configured to send a status message, via said second and first communications devices to said first processor, related to whether the captured at least one coded image is decodable based upon a currently selected encoding scheme;
said first processor also configured to select a new encoding scheme based upon the status message, generate at least one new coded image according to the new encoding scheme, and display the new coded image on the first display **(18);** the at least one new coded image including at least a portion of the data contained in the at least one coded image if the status message indicates that the captured at least one coded image is not decodable.

2. The communications system **(10"')** of Claim 1, where said first processor **(14"')** is configured to select the new encoding scheme with a higher data density than the currently selected encoding scheme.

3. The communications system **(10"')** of Claim 2, where said first processor **(14"')** is configured to select the new encoding scheme with a lower data density than the currently selected encoding scheme.

4. The communications system **(10")** of Claim 1, wherein the status message comprises a desired encoding scheme from among the plurality of different encoding schemes; and wherein said first processor **(14")** is configured to select the desired encoding scheme based upon the status message.

5. The communications system **(10')** of Claim 1, wherein at least one of the plurality of different encoding schemes comprises a repeating encoding scheme.

6. The communications system **(10')** of Claim 1, wherein the at least one coded image comprises a series of coded images.

7. The communications system **(10')** of Claim 1, wherein said first communications device **(12')** and said second communications device **(30')** comprise first and second Bluetooth devices, respectively.

8. The communications system **(10")** of Claim 1, wherein said second communications device **(30")** comprises a second display **(39");** wherein said second processor **(32")** is configured to display a status image representing the status message on said second display; and wherein said first communications device **(12")** comprises a first camera **(20")** configured to capture the status image.

9. The communications system **(10"')** of Claim 1, wherein said second communications device **(38"')** comprises an optical source; and wherein said first communications device **(20"')** comprises an optical detector.

10. The communications system **(10')** of Claim 1, wherein at least one of the first and second communications devices **(12', 30')** comprises a mobile wireless communications device.

11. A communications method comprising:
generating at least one coded image according to a selectable encoding scheme from among a plurality of different encoding schemes, using a first processor **(14)** of a first device **(12),** and displaying the at least one coded image on a first display **(18)** of the first device;
capturing the at least one coded image on the first display, using a second camera **(36)** of a second device **(30);**
sending a status message to the first processor, via a second communications device **(38)** of the second device and a first communications device of the first device **(20),** related to whether the captured at least one coded image is decodable based upon a currently selected encoding scheme, using a second processor **(32)** of the second device;
selecting a new encoding scheme based upon the status message, using the first processor, and generating at least one new coded image according to the new encoding scheme; and
displaying the new coded image on the first display **(18);** the at least one new coded image including at least a portion of the data contained in the at least one coded image if the status message indicates that the captured at least one coded image is not decodable.

12. The communications method of Claim 11, wherein the new encoding scheme is selected to have a higher data density than the currently selected encoding scheme.

13. The communications method of Claim 11, wherein the new encoding scheme is selected to have a lower data density than the currently selected encoding scheme.

## Patentansprüche

1. Kommunikationssystem (**10**), umfassend:
eine erste Vorrichtung (**12**), umfassend einen ersten Bildschirm (**18**),
einen ersten Prozessor (**14**), der zum Erzeugen mindestens eines codierten Bildes gemäß eines aus einer Vielzahl unterschiedlicher Codierungsschemata wählbaren Codierungsschemas und zum Anzeigen des mindestens einen codierten Bildes auf dem ersten Bildschirm ausgelegt ist,
eine erste Kommunikationsvorrichtung (**20**), die mit dem ersten Prozessor gekoppelt ist, und
eine zweite Vorrichtung (**30**), umfassend
eine zweite Kamera (**36**), die zum Erfassen des mindestens eines codierten Bildes auf dem ersten Bildschirm ausgelegt ist,
eine zweite Kommunikationsvorrichtung (**38**),
einen zweiten Prozessor (**32**), der mit der zweiten Kamera und der zweiten Kommunikationsvorrichtung gekoppelt ist und der zum Senden einer Zustandsmitteilung über die zweite und die erste Kommunikationsvorrichtung an den ersten Prozessor ausgelegt ist, die damit in Verbindung steht, ob das erfasste mindestens eine codierte Bild auf der Grundlage eines aktuell gewählten Codierungsschemas decodierbar ist;
wobei der erste Prozessor weiterhin zum Wählen eines neuen Codierungsschemas auf der Grundlage der Zustandsmitteilung, zum Erzeugen mindestens eines neuen codierten Bildes gemäß dem neuen Codierungsschema und zum Anzeigen des neuen codierten Bildes auf dem ersten Bildschirm (**18**) ausgelegt ist, wobei das neue codierte Bild mindestens einen Teil der Daten beinhaltet, die in dem mindestens einen codierten Bild enthalten sind, wenn die Zustandsmitteilung angibt, dass das erfasste mindestens eine codierte Bild nicht decodierbar ist.

2. Kommunikationssystem (**10"'**) nach Anspruch 1, wobei der erste Prozessor (**14"'**) zum Wählen des neuen Codierungsschemas mit einer höheren Datendichte als das aktuell gewählte Codierungsschema ausgelegt ist.

3. Kommunikationssystem (**10"'**) nach Anspruch 2, wobei der erste Prozessor (**14"'**) zum Wählen des neuen Codierungsschemas mit einer niedrigeren Datendichte als das aktuell gewählte Codierungsschema ausgelegt ist.

4. Kommunikationssystem (**10"**) nach Anspruch 1, wobei die Zustandsmitteilung ein gewünschtes Codierungsschema aus einer Vielzahl von unterschiedlichen Codierungsschemata umfasst und wobei der erste Prozessor (**14"**) zum Wählen des gewünschten Codierungsschemas auf der Grundlage der Zustandsmitteilung ausgelegt ist.

5. Kommunikationssystem (**10'**) nach Anspruch 1, wobei das mindestens eine der Vielzahl von unterschiedlichen Codierungsschemata ein sich wiederholendes Codierungsschema umfasst.

6. Kommunikationssystem (**10'**) nach Anspruch 1, wobei das mindestens eine codierte Bild eine Reihe von codierten Bildern umfasst.

7. Kommunikationssystem (**10'**) nach Anspruch 1, wobei die erste Kommunikationsvorrichtung (**12'**) und die zweite Kommunikationsvorrichtung (**30'**) eine erste bzw. zweite Bluetooth-Vorrichtung umfassen.

8. Kommunikationssystem (**10"**) nach Anspruch 1, wobei die zweite Kommunikationsvorrichtung (**30"**) einen zweiten Bildschirm (**39"**) umfasst; wobei der zweite Prozessor (**32"**) zum Anzeigen eines die Zustandsmitteilung repräsentierendes Zustandsbildes auf dem zweiten Bildschirm ausgelegt ist; und wobei die erste Kommunikationsvorrichtung (**12"**) eine erste Kamera (**20"**) umfasst, die zum Erfassen des Zustandsbilds ausgelegt ist.

9. Kommunikationssystem (**10"'**) nach Anspruch 1, wobei die zweite Kommunikationsvorrichtung (**38"'**) eine optische Quelle umfasst; und wobei die erste Kommunikationsvorrichtung (**20"'**) einen optischen Detektor umfasst.

10. Kommunikationssystem (**10'**) nach Anspruch 1, wobei mindestens eine der ersten und der zweiten Kommunikationsvorrichtung (**12', 30'**) eine mobile drahtlose Kommunikationsvorrichtung umfasst.

11. Kommunikationsverfahren, umfassend:
Erzeugen mindestens eines codierten Bildes gemäß eines aus einer Vielzahl unterschiedlicher Codierungsschemata auswählbaren Codierungsschemas unter Verwendung eines ersten Prozessors (**14**) einer ersten Vorrichtung (**12**) und Anzeigen des mindestens einen codierten Bildes auf einem ersten Bildschirm (**18**) der ersten Vorrichtung;
Erfassen des mindestens einen codierten Bildes auf dem ersten Bildschirum unter Verwendung einer zweiten Kamera (**36**) einer zweiten Vorrichtung (**30**);
Senden einer Zustandsmitteilung, die damit in Verbindung steht, ob das erfasste mindestens eine codierte Bild auf der Grundlage eines aktuell gewählten Codierungsschemas decodierbar ist, unter Verwendung eines zweiten Prozessors (**32**) der zweiten Vorrichtung über eine zweite Kommunikationsvorrichtung (**38**) der zweiten Vorrichtung und eine erste Kommunikationsvorrichtung der ersten Vorrichtung (**20**) an den ersten Prozessor;
Wählen eines neuen Codierungsschemas auf der Grundlage der Zustandsmitteilung unter Verwendung des ersten Prozessors und Erzeugen mindestens eines neuen codierten Bildes gemäß dem neuen Codierungsschema und
Anzeigen des neuen codierten Bildes auf dem ersten Bildschirm (**18**); wobei das mindestens eine neue codierte Bild mindestens einen Teil der Daten beinhaltet, die in dem mindestens einen codierten Bild enthalten sind, wenn die Zustandsmitteilung angibt, dass das erfasste mindestens eine codierte Bild nicht decodierbar ist.

12. Kommunikationsverfahren nach Anspruch 11, wobei das neue Codierungsschema mit einer höheren Datendichte als das aktuell gewählte Codierungsschema gewählt wird.

13. Kommunikationsverfahren nach Anspruch 11, wobei das neue Codierungsschema mit einer niedrigeren Datendichte als das aktuell gewählte Codierungsschema gewählt wird.

## Revendications

1. Système de communication (10) comprenant :
un premier dispositif (12) comprenant :
un premier dispositif d'affichage (18),
un premier processeur (14) configuré pour générer au moins une image codée selon un schéma de codage pouvant être sélectionné parmi une pluralité de différents schémas de codage, et pour afficher l'au moins une image codée sur ledit premier dispositif d'affichage,
un premier dispositif de communication (20) couplé audit premier processeur ; et
un deuxième dispositif (30) comprenant :
une deuxième caméra (36) configurée pour capturer l'au moins une image codée sur ledit premier dispositif d'affichage,
un deuxième dispositif de communication (38),
un deuxième processeur (32) couplé à ladite deuxième caméra et audit deuxième dispositif de communication et configuré pour envoyer un message d'état, par l'intermédiaire desdits deuxième et premier dispositifs de communication audit premier processeur, concernant le fait de savoir si l'au moins une image codée capturée peut être décodée sur la base d'un schéma de codage actuellement sélectionné ;
ledit premier processeur étant également configuré pour sélectionner un nouveau schéma de codage sur la base du message d'état, pour générer au moins une nouvelle image codée selon le nouveau schéma de codage, et pour afficher la nouvelle image codée sur le premier dispositif d'affichage (18) ; l'au moins une nouvelle image codée comportant au moins une partie des données contenues dans l'au moins une image codée si le message d'état indique que l'au moins une image codée capturée ne peut pas être décodée.

2. Système de communication (10"') de la revendication 1, dans lequel ledit premier processeur (14"') est configuré pour sélectionner le nouveau schéma de codage ayant une densité de données supérieure à celle du schéma de codage actuellement sélectionné.

3. Système de communication (10"') de la revendication 2, dans lequel ledit premier processeur (14"') est configuré pour sélectionner le nouveau schéma de codage ayant une densité de données inférieure à celle du schéma de codage actuellement sélectionné.

4. Système de communication (10") de la revendication 1, dans lequel le message d'état comprend un schéma de codage souhaité parmi la pluralité de différents schémas de codage ; et dans lequel ledit premier processeur (14") est configuré pour sélectionner le schéma de codage souhaité sur la base du message d'état.

5. Système de communication (10') de la revendication 1, dans lequel au moins l'un de la pluralité de différents schémas de codage comprend un schéma de codage répétitif.

6. Système de communication (10') de la revendication 1, dans lequel l'au moins une image codée comprend une série d'images codées.

7. Système de communication (10') de la revendication 1, dans lequel lesdits premier dispositif de communication (12') et deuxième dispositif de communication (30') comprennent respectivement des premier et deuxième dispositifs Bluetooth.

8. Système de communication (10") de la revendication 1, dans lequel ledit deuxième dispositif de communication (30") comprend un deuxième dispositif d'affichage (39") ; dans lequel ledit deuxième processeur (32") est configuré pour afficher une image d'état représentant le message d'état sur ledit deuxième dispositif d'affichage ; et dans lequel ledit premier dispositif de communication (12") comprend une première caméra (20") configurée pour capturer l'image d'état.

9. Système de communication (10") de la revendication 1, dans lequel ledit deuxième dispositif de communication (38"') comprend une source optique ; et dans lequel ledit premier dispositif de communication (20"') comprend un détecteur optique.

10. Système de communication (10') de la revendication 1, dans lequel au moins l'un des premier et deuxième dispositifs de communication (12', 30') comprend un dispositif de communication sans fil mobile.

11. Procédé de communication comprenant le fait :
de générer au moins une image codée selon un schéma de codage pouvant être sélectionné parmi une pluralité de différents schémas de codage, en utilisant un premier processeur (14) d'un premier dispositif (12), et d'afficher l'au moins une image codée sur un premier dispositif d'affichage (18) du premier dispositif ;
de capturer l'au moins une image codée sur le premier dispositif d'affichage, en utilisant une deuxième caméra (36) d'un deuxième dispositif (30) ;
d'envoyer un message d'état au premier processeur, par l'intermédiaire d'un deuxième dispositif de communication (38) du deuxième dispositif et d'un premier dispositif de communication du premier dispositif (20), concernant le fait de savoir si l'au moins une image codée capturée peut être décodée sur la base d'un schéma de codage actuellement sélectionné, en utilisant un deuxième processeur (32) du deuxième dispositif ;
de sélectionner un nouveau schéma de codage sur la base du message d'état, en utilisant le premier processeur, et de générer au moins une nouvelle image codée selon le nouveau schéma de codage ; et
d'afficher la nouvelle image codée sur le premier dispositif d'affichage (18) ; l'au moins une nouvelle image codée comportant au moins une partie des données contenues dans l'au moins une image codée si le message d'état indique que l'au moins une image codée capturée ne peut pas être décodée.

12. Procédé de communication de la revendication 11, dans lequel le nouveau schéma de codage est sélectionné pour avoir une densité de données supérieure à celle du schéma de codage actuellement sélectionné.

13. Procédé de communication de la revendication 11, dans lequel le nouveau schéma de codage est sélectionné pour avoir une densité de données inférieure à celle du schéma de codage actuellement sélectionné.
